# EUROPÄISCHE PATENTANMELDUNG

(11) **EP 2 039 554 A2**
(43) Veröffentlichungstag der Anmeldung: **25.03.2009**
(21) Anmeldenummer: 08013094.1
(22) Anmeldetag: 21.07.2008
(51) Int. Cl.: B60K 6/24, B60K 6/12, B60K 6/46, B60K 6/48, F01B 11/00, F02B 71/04, F02B 75/02

(54) **Serieller und paralleler Hybridantrieb mit zwei Primäraggregaten**

(30) Priorität: 18.09.2007 DE 102007044491
(71) Anmelder: Robert Bosch GmbH, 70184 Stuttgart (DE)
(72) Erfinder: Bauer, Richard, 97225 Zellingen (DE); Dantlgraber, Jörg, Dr., 97816 Lohr (DE); Mark, Alexander, 97080 Würzburg (DE); Försterling, Heino, 97816 Lohr (DE); Schäffer, Rudolf, 97828 Marktheidenfeld (DE); Feuser, Alfred, Prof. Dr., 97816 Lohr (DE)

(57) **Zusammenfassung**

Die Erfindung betrifft einen Hybridantrieb mit mindestens zwei Primäraggregaten (2,4) und einer Hydro- oder Elektromaschine (6), wobei ein erstes Primäraggregat (2) und die Hydro- oder Elektromaschine mit Triebwelle (8) eines Antriebsstrang in Wirkverbindung stehen. Die Hydro- oder Elektromaschine (6) bildet mit diesem ersten Primäraggregat (2) einen Parallel-Hybridantrieb und mit dem anderen, zweiten Primäraggregat (4) einen Seriell-Hybridantrieb bildet. Vorteilhaft ist das erste Primäraggregat (2) ein Benzin- oder Dieselmotor, und das zweite Primäraggregat (4) eine Freikolbenmaschine.

## Beschreibung

Die Erfindung betrifft einen Hybridantrieb gemäß dem Oberbegriff des Patentanspruch 1.

Als Hybridantrieb wird eine Kombination verschiedener Antriebsprinzipien oder verschiedener Energiequellen für eine Antriebsaufgabe innerhalb einer Anwendung, beispielsweise eines Fahrzeugs, bezeichnet.

In Abhängigkeit der Anordnung und der mechanischen Verbindung der Antriebsmaschinen wird zwischen Seriell-Hybridantrieb und Parallel-Hyb-ridantrieb unterschieden. Bei einem Seriell-Hybrid wird die gesamte Leistung der Verbrennungskraftmaschine über einen elektrischen Generator oder eine hydraulische Pumpe in elektrische/hydraulische Energie umgewandelt und der Antrieb des Fahrzeugs erfolgt ausschließlich durch einen Elektro- oder Hydromotor. Nachteilig hierbei ist, dass die mechanische Leistung erst in elektrische/hydraulische Leistung umgewandelt wird und anschließend wieder in mechanische Leistung, womit der serielle Hybridmotor im oberen Leistungsbereich, beispielsweise Volllast, einen schlechten Wirkungsgrad aufweist.

Bei einem Parallel-Hybrid stehen zwei Antriebsmaschinen, beispielsweise ein Elektromotor oder Hydromotor und ein Verbrennungsmotor, mit einem Achsantrieb in Verbindung, so dass das betreffende Fahrzeug bei entsprechender Ausbildung und Anordnung des Antriebsstrangs, separat von dem Elektromotor oder Hydromotor, separat von der Verbrennungskraftmaschine, oder gemeinsam von beiden Antriebsmaschinen angetrieben werden kann. Diese Lösung hat den Nachteil, dass der Elektromotor oder Hydromotor abhängig von der Energie der Verbrennungskraftmaschine ist und beispielsweise ein reiner Elektromotorbetrieb nur möglich ist, wenn die Energie von der Verbrennungskraftmaschine erzeugt wird. Es kann zwar auch Bremsenergie des Fahrzeugs zum Laden der Batterie für den Elektromotor genutzt werden, deren Kapazität reicht jedoch bei einem längeren Betrieb eines Fahrzeugs nicht aus.

In der US 5 495 912 ist ein Parallel-Hybrid offenbart, bei dem eine Verbrennungskraftmaschine Energie an eine Triebwelle überträgt, an der eine Hydroeinheit angeschlossen ist, die als Hydropumpe oder Hydromotor betrieben werden kann und von der eine Antriebseinheit (Getriebe, Räder etc.) eines Fahrzeugs angetrieben wird. Mit der Hydroeinheit ist ein Hydrospeicher in Wirkverbindung, der Energie an den Hydromotor abgeben oder Energie von der Hydropumpe aufnehmen kann. Zum Laden des Hydrospeichers wird entweder die Bremsenergie des Fahrzeugs und somit indirekt die Verbrennungskraftmaschine verwendet, die einen Teil der Beschleunigungsenergie vor dem Bremsvorgang liefern muss, oder es wird direkt die Verbrennungskraftmaschine zum antreiben der Hydropumpe verwendet. Zusätzlich zur Verbrennungskraftmaschine kann eine weitere Verbrennungskraftmaschine an die Triebwelle zugeschaltet werden, um die Leistung des Parallel-Hybrids zu erhöhen. Die Nachteile der Lösung der US 5 495 912 sind die oben beschriebenen, demnach der Elektromotor nicht unabhängig von der an die Triebwelle angeschlossenen Verbrennungskraftmaschine betrieben werden kann.

Die Aufgabe der vorliegenden Erfindung ist es, einen Hybridantrieb zu schaffen, der sehr variabel einsetzbar ist und einen hohen Wirkungsgrad aufweist.

Diese Aufgabe wird gelöst durch einen Hybridantrieb, der zwei Primäraggregate und eine Hydro- oder Elektromaschine hat, wobei eines der Primäraggregate und die Hydro- oder Elektromaschine in Wirkverbindung mit einer Triebwelle stehen, wobei die Hydro- oder Elektromaschine mit einem der Primäraggregate einen Seriell-Hybridantrieb und mit dem anderen Primäraggregat einen Parallel-Hybridantrieb bildet. Die Kombination eines Seriell-Hydrid- mit einem Parallel-Hybridantrieb bietet den Vorteil, dass der Hydro- oder Elektromotor weitgehend unabhängig von dem mit der Triebwelle in Wirkverbindung stehenden Primäraggregat betrieben werden kann. Beim beispielsweisen Abschalten dieses Primäraggregats kann der Hydro- oder Elektromotor im vollen Funktionsumfang weiter betrieben werden, da dieser von dem anderen Primäraggregat mit Energie versorgt wird.

Vorzugsweise weisen die Primäraggregate eine unterschiedliche Größe in Bezug auf Leistung und Bauraum auf, wodurch der Hybridantrieb flexibel an den gewünschten Betriebs- und Leistungsbereich eines Fahrzeugs angepasst werden kann:

Vorzugsweise ist ein großes, in Bezug auf den Bauraum und der Leistung, Primäraggregat, das mit der Hydro- oder Elektromaschine einen parallelen Hybridantrieb bildet, eine Verbrennungskraftmaschine. Diese kann eine hohe Antriebsleistung zur Verfügung stellen und ein Fahrzeug sehr effizient und mit einem hohen Wirkungsgrad bei hohen Geschwindigkeiten oder Beschleunigungen bewegen.

In einer bevorzugten Ausführung ist das kleinere Primäraggregat, das mit der Hydro- oder Elektromaschine einen seriellen Hybridantrieb bildet, eine Freikolbenmaschine. Diese arbeitet sehr effizient im Niedrigleistungsbereich und kann die Hydro- oder Elektromaschine ausreichend mit Energie versorgen, so dass diese beispielsweise im "Stop and Go"-Betrieb des Fahrzeugs weitgehend unabhängig von dem anderen Primäraggregat (Verbrennungskraftmaschine) betrieben werden kann.

Die Freikolbenmaschine ist beispielsweise niederdruckseitig über eine Niederdruckleitung mit einem Niederdruckspeicher und hochdruckseitig über eine Hochdruckleitung mit einem Hochdruckspeicher verbunden. Die Hydromaschine ist vorzugsweise mit der Hochdruck- und Niederdruckleitung verbunden und kann als Hydropumpe Druckmittel von dem Niederdruckspeicher zum Hochdruckspeicher fördern und als Hydromotor vom Hochdruckspeicher mit Druckmittel versorgt werden und dieses an den Niederdruckspeicher abgeben.

Die Hydromaschine ist vorteilhafterweise über einer Kupplung und einer mechanischen Übersetzung in Verbindung mit der Triebwelle. Hierdurch kann diese, durch ein- oder auskuppeln, vom Fahrzeugantrieb zu- oder weggeschaltet werden.

Die Verbrennungskraftmaschine ist über eine Kupplung und ein Getriebe in Verbindung mit der Triebwelle und kann somit wie die Freikolbenmaschine zum Antrieb zu- oder weggeschaltet werden.

Die Triebwelle ist beispielsweise mit einem Differentialgetriebe und einem daran angeordneten Radantrieb in Wirkverbindung.

Die Triebwelle kann entweder von der Verbrennungskraftmaschine angetrieben werden oder von dem Hydromotor, oder von beiden. Hierdurch ist eine flexible Leistungsanpassung des Antriebs des Fahrzeugs an unterschiedliche Einsatzbedingungen möglich.

Die Hydropumpe kann vorteilhafterweise vom Radantrieb über das Differentialgetriebe und die Triebwelle angetrieben werden, wodurch es möglich ist, Bremsenergie in hydraulische Energie umzuwandeln.

Sonstige Vorteilhafte Weiterbildungen der Erfindung sind Gegenstand weiterer Unteransprüche.

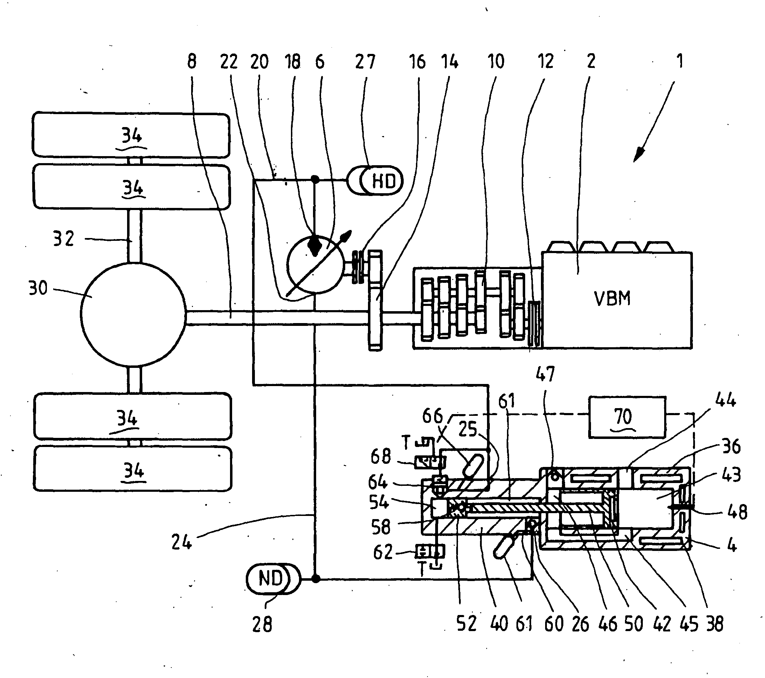

Im Folgenden wird ein bevorzugtes Ausführungsbeispiel der Erfindung anhand einer einzigen Zeichnung näher erläutert.

Diese zeigt eine schematische Darstellung eines Hybridantriebs gemäß einem Ausführungsbeispiel.

Die Figur zeigt in einer schematischen Ansicht die Anordnung eines Hybridantriebs 1 mit zwei Primäraggregaten 2, 4, die unterschiedliche Leistung und Bauraum haben, und einer Hydromaschine 6. Diese und das Primäraggregat 2, welches als Verbrennungskraftmaschine 2 (wird im Folgendem mit VKM 2 abgekürzt), beispielsweise als Diesel- oder Benzinmotor, ausgeführt ist, stehen mit einer Triebwelle 8 in Wirkverbindung. Die VKM 2 ist dabei über ein Getriebe 10 und eine Kupplung 12 mit der Triebwelle 8 verbunden und wird über die Kupplung 12 zur Triebwelle 8 zu- und weggeschaltet. Das Getriebe 10 ist mit mehreren Übersetzungsverhältnissen zwischen der VKM 2 und der Triebwelle 8 ausgeführt. Ebenfalls mit einem Getriebe 14, das allerdings eine feste Übersetzung hat, und einer Kupplung 16 ist die Hydromaschine 6 an die Triebwelle 8 angeschlossen und mit der Kupplung 16 zu dieser zu-und wegschaltbar. Die Hydromaschine 6 ist über einen Hochdruckanschluss 18 an eine Hochdruckleitung 20 und mit einem Niederdruckanschluss 22 an eine Niederdruckleitung 24 angeschlossen. Die Hoch- und Niederdruckleitung 20, 24 sind wiederum mit dem anderen Primäraggregat 4 verbunden, das in Form einer Freikolbenmaschine 4 (wird im Folgendem mit FKM 4 abgekürzt) ausgebildet ist. Die Hochdruckleitung 20 ist dabei an einem Auslassanschluss 25 und die Niederdruckleitung 24 an einem Einlassanschluss 26 der FKM 4 angeschlossen. Ein Hochdruckspeicher 27 ist an die Hochdruckleitung 20 angebracht und ist somit im Wirkeingriff mit der Hydromaschine 6 und der FKM 4. Niederdruckseitig ist ein Niederdruckspeicher 28 an die Niederdruckleitung 24 angeschlossen und in Verbindung mit der Hydromaschine 6 und der FKM 4. Die Hydromaschine 6 bildet zusammen mit der FKM 4 einen Seriell-Hybridantrieb und mit der VKM 2 einen Parallel-Hybridantrieb. Die Triebwelle 8 ist mit einem Differentialgetriebe 30 verbunden, an das eine Radantriebswelle 32 angeschlossen ist, die wiederum mit Rädern 34 eines nicht dargestellten Fahrzeugs verbunden ist.

Im Folgenden wird der Aufbau der FKM 4 näher erläutert. Diese weist ein Motorgehäuse 36 auf, durch das ein Verbrennungszylinder 38 und ein Hydraulikzylinder 40 begrenzt sind. In einer Zylinderbohrung des Verbrennungszylinders 38 ist ein Motorkolben 42 geführt, über den die Zylinderbohrung in einen Verbrennungsraum 43 und einen Einlassraum 46 unterteilt ist. Der Verbrennungsraum 43 weist einen Auslasskanal 44 und einen Lufteinlass 45 auf, der über den Einlassraum 46 mit der Umgebung, über ein zu dieser hin schließenden Rückschlagventil 47, verbunden ist. Die Einspritzung des Kraftstoffes in den Verbrennungsraum 38 erfolgt über ein Einspritzventil 48 im Zylinderkopf des Verbrennungszylinders 38. Der Motorkolben 42 trägt eine Kolbenstange 50. Diese Kolbenstange 20 taucht in einer Axialbohrung des Hydraulikzylinders 40 ein und bildet entgegengesetzt zur Seite des Motorkolbens 42 einen Hydraulikkolben 52 auf. Durch den Hydraulikkolben 52 wird die Axialbohrung in einen Zylinderraum 54 und einen Ringraum 56 unterteilt. Der Ringraum 56 ist mit dem Zylinderraum 54 über ein im Hydraulikkolben 52 ausgebildetes Rückschlagventil 58, das zum Zylinderraum 54 hin öffnet, verbindbar. In den Ringraum 56 gelangt Druckmittel von dem Niederdruckspeicher 28 und der Niederdruckleitung 24 über ein Rückschlagventil 60, das zum Ringraum 56 hin öffnet. Ein weiterer Niederdruckspeicher 61 ist kurz vor dem Rückschlagventil 60, außerhalb des Ringraums 56, mit der Niederdruckleitung 24 verbunden. An den Zylinderraum 54 ist ein 2/2-Wegeventil 62 angeschlossen, das eine Verbindung zu einem Tank T herstellt oder geschlossen ist. Des Weiteren ist mit dem Zylinderraum 54 ein Arbeitsanschluss eines Logikelements 64 in Druckmittelverbindung, dessen anderer Arbeitsanschluss mit einem Hochdruckspeicher 66 und der Hochdruckleitung 20 verbunden ist. An einem Steueranschluss des Logikelements 64 ist ein 3/2-Wegeventil 68 in Wirkverbindung, das eine Verbindung zu dem Tank T oder zu der Hochdruckleitung 20 schaltet.

Im Betrieb der FKM 4 wird Verbrennungsenergie, die im Verbrennungsraum 43 erzeugt wird; über die axiale Bewegung des Motorkolbens 42, der Kolbenstange 50 und des Hydraulikkolbens 52 in hydraulische Energie gewandelt, indem Druckmittel, das in den Zylinderraum 54 vom Niederdruckspeicher 28 über die Druckleitung 24 gefördert wird, in diesem verdichtet wird und dann weiter über die Hochdruckleitung 20 zum Hochdruckspeicher 27 gelangt. Gesteuert wird die FKM 4 über ein Steuergerät 70. Die FKM 4 kann sehr variabel gesteuert und betrieben werden. Außerdem lässt sich die FKM 4 sehr kompakt bauen und zeichnet sich durch große Einfachheit und ein hohes Leistungs-Gewichts-Verhältnis aus. Für zusätzliche Informationen bezüglich der Funktionsweise und des Aufbaus der FKM 4 wird beispielhaft auf die Druckschrift DE 100 26 728 A1 verwiesen.

Die Hydromaschine 6 kann als Hydromotor oder Hydropumpe betrieben werden. Wird die Hydromaschine 6 als Hydromotor 6 betrieben, so wird dieser über den Hochdruckspeicher 27, der Hochdruckleitung 20 und dem Hochdruckanschluss 18 mit Druckmittel versorgt und angetrieben und das Druckmittel dann weiter über den Niederdruckanschluß 22 in den Niederdruckspeicher 28 geleitet. Bei eingekuppelter Kupplung 16 treibt der Hydromotor 6 über das Getriebe 14 die Triebwelle 8 an, die wiederum über das Differentialgetriebe 30 und den Radantrieb 32 die Räder 34 antreibt. Ein Einsatz der Hydromaschine 6 als Hydropumpe 6 erfolgt, wenn die Räder 34, beispielsweise beim Bremsen des Fahrzeugs, über den Radantrieb 32 und das Differentialgetriebe 30 die Triebwelle 8 antreiben und diese wiederum über das Getriebe 14 und die eingekuppelte Kupplung 16 die Hydropumpe 6. Hierbei ist die VKM 2 ausgekuppelt. Die Hydropumpe 6 fördert dabei Druckmittel vom Niederdruckspeicher 28 zum Hochdruckspeicher 27 über die Druckleitungen 20, 24, so dass dieser aufgeladen ist. Mit der Hydropumpe 6 wird somit die beim Bremsen erzeugte Bremsenergie in hydraulische Energie umgewandelt und im Hochdruckspeicher 26 gespeichert.

Die VKM 2 treibt bei eingekuppelter Kupplung 12 über das Getriebe 10 die Triebwelle 8 an, die das Drehmoment dann zu den Rädern 34 überträgt.

Der Hybridantrieb 1 kann sehr unterschiedlich eingesetzt werden. Bei hohen Geschwindigkeiten und Leistungsbedarf des Fahrzeugs wird dieser über die VKM 2 angetrieben, die bei Volllast einen sehr hohen Wirkungsgrad hat. Soll das Fahrzeug mit maximaler Leistung des Hybridantriebs 1 betrieben werden, so wird zusätzlich der Hydromotor 6 hinzugeschaltet und das Fahrzeug wird mit zwei Motoren 2, 6 gleichzeitig im "Boost-Betrieb" angetrieben. Der Hydromotor 6 wird über den Hydrospeicher 26 mit Energie versorgt, der wiederum durch die FKM 4 aufgeladen wird.

Bei einen "Stop an Go"-Einsatz des Fahrzeugs, der aus kurzen Beschleunigungsphase mit anschließender Verzögerungsphase besteht, beispielsweise wie bei Müllsammelfahrzeugen oder bei Pkws im Stadtverkehr, wird dieses mit dem hydraulischen Seriell-Hybridantrieb, bestehend aus der Hydromaschine 6 und der FKM 4, angetrieben. Das Fahrzeug wird durch die Hydromaschine 6 in Form des Hydromotors 6 beschleunigt und beim Verzögern und Bremsen wird die Hydromaschine 6 als Hydropumpe 6 verwendet. Durch den Rückgewinn der Bremsenergie des Fahrzeugs beschränkt sich der zusätzliche Energiebedarf für den Hydromotor 6 allein auf den Ausgleich der Verluste, die durch beispielsweise Fahrwiderstände (Luftwiderstand, Rollwiderstand) und Wandlungsverluste im Antriebsstrang entstehen. Dieser geringe Energiebedarf wird dann durch die FKM 4 gedeckt, indem diese im Speicherladebetrieb den Hochdruckspeicher 27 auflädt. In diesem Einsatzbereich des Fahrzeugs arbeitet die FKM 4 hocheffizient mit einem hohen Wirkungsgrad, wodurch der Kraftstoffverbrauch und die CO₂-Emissionen signifikant gesenkt werden.

Die VKM 2 und die Hydromaschine 6 können als Antriebsaggregate in allen Leistungsbereichen unabhängig voneinander und beliebig vom Triebstrang 8 zu- und weggeschaltet werden, wodurch ein Höchstmaß an Flexibilität des Hybridantriebs 1 ermöglicht wird und dieser mit bestem Wirkungsgrad und optimal angepasster Leistung betrieben werden kann.

Die Erfindung ist nicht auf das oben erläuterte Ausführungsbeispiel beschränkt. Es ist denkbar den Seriell-Hybrid anstatt hydraulisch, elektrisch zu betreiben. Der Hochdruckspeicher 27 wäre dann als Batterie ausgeführt, und der Hydroantrieb 6 als Elektroantrieb, der als Generator und Motor einsetzbar ist.

Offenbart ist eine Hybridantrieb, mit mindestens zwei Primäraggregaten und einer Hydro- oder Elektromaschine, wobei ein Primäraggregat und die Hydro- oder Elektromaschine mit einem Antriebsstrang in Wirkverbindung stehen und die Hydro- oder Elektromaschine mit diesem Primäraggregat einen Parallel-Hybridantrieb und mit dem anderen Primäraggregat einen Seriell-Hybridantrieb bildet.

## Patentansprüche

1. Hybridantrieb, mit wenigstens zwei Primäraggregaten (2, 4) und einer Hydro- oder Elektromaschine (6), wobei die Hydro- oder Elektromaschine (6) und ein Primäraggregat (2) mit einer Triebwelle (8) in Wirkverbindung stehen, **dadurch gekennzeichnet, dass** die Hydro- oder Elektromaschine (6) mit dem einen Primäraggregat (2) einen seriellen Hybridantrieb und mit dem anderen Primäraggregat (4) einen parallelen Hybridantrieb bildet.

2. Hybridantriebsstrang nach Anspruch 1, wobei die Primäraggregate (2, 4) eine unterschiedliche Größe in Bezug auf ihre Leistung haben.

3. Hybridantriebsstrang nach Anspruch 2, wobei ein großes Primäraggregat (2), das in Wirkverbindung mit der Triebwelle (8) steht, eine Verbrennungskraftmaschine (2) ist.

4. Hybridantriebsstrang nach Anspruch 2 oder 3, wobei ein kleines Primäraggregat (4), das mit der Hydro- oder Elektromaschine (6) einen seriellen Hybridantrieb bildet, eine Freikolbenmaschine (4) ist.

5. Hybridantriebsstrang nach Anspruch 4, wobei die Freikolbenmaschine (4) niederdruckseitig über eine Niederdruckleitung (24) mit einem Niederdruckspeicher (28) verbunden ist und hochdruckseitig über eine Hochruckleitung (20) mit einem Hochdruckspeicher (27).

6. Hybridantriebsstrang nach Anspruch 4, wobei die Hydromaschine (6) mit der Hochdruck- und Niederdruckleitung (20, 24) verbunden ist.

7. Hybridantriebsstrang nach einem der vorhergehenden Ansprüche, wobei die Hydromaschine (6) über eine Kupplung (16) und einem Getriebe (14) in Wirkverbindung mit der Triebwelle (8) steht.

8. Hybridantriebsstrang nach einem der vorhergehenden Ansprüche, wobei die Hydromaschine (6) als Hydropumpe (6) oder als Hydromotor (6) betrieben wird.

9. Hybridantriebsstrang nach Anspruch 2 bis 7, wobei die Verbrennungskraftmaschine (2) über eine Kupplung (12) und ein Getriebe (10) in Wirkverbindung mit der Triebwelle (8) steht.

10. Hybridantriebsstrang nach einem der vorhergehenden Ansprüche, wobei die Triebwelle (8) mit einem Differentialgetriebe (30) und einen daran angeordneten Radantrieb in Wirkverbindung steht.

11. Hybridantriebsstrang nach Anspruch 7, wobei die Verbrennungskraftmaschine (2) und/oder der Hydromotor (6) die Triebwelle, (8) antreiben.

12. Hybridantriebsstrang nach Anspruch 9, wobei der Radantrieb über das Differentialgetriebe (30) und die Triebwelle (8) die Hydropumpe (6) antreibt.
